# EUROPEAN PATENT APPLICATION

(11) **EP 2 889 470 A1**
(43) Date of publication of application: **01.07.2015**
(21) Application number: 13708250.9
(22) Date of filing: 16.01.2013
(51) Int. Cl.: F03B 13/10, F03B 17/06, F03B 3/04

(54) **A POWER CONVERSION SYSTEM FOR FLUIDS**

(30) Priority: 27.08.2012 UA 2012010149
(71) Applicant: Antanta Eko Limited Liability Company, Kharkiv 61002 (UA)
(72) Inventor: GALETSKIJ, Anatolij Jurevich, Dnepropetrovsk 49045 (UA); GALETSKIJ, Taras Jurevich, Dnepropetrovsk 49128 (UA); GALETSKIJ, Anton Anatolevich, Dnepropetrovsk 49045 (UA)
(74) Representative: Lapienis, Juozas
(86) International application number: PCT/UA2013/000005
(87) International publication number: WO 2014/035358

(57) **Abstract**

The group of inventions relates to the field of renewable energy sources, in particular, in wind and water power engineering, and transformation of this energy into other kinds of energy. The fluid flow power transformation system comprises a body of rotation disposed in a cylindrical body with a diffusor provided with a protective screen, a convergent cone, at least one coupling element in the form of a shaft and a foundation block. The body of rotation consists of an outer and an inner shall fixedly connected by sail-type blades , or two or more sequentially arranged and oppositely rotating wheels with an outer and an inner shell fixedly connected by sail-type blades.

## Description

The group of inventions relates to the field of renewable energy sources, in particular, in wind and water power engineering, and transformation of this energy into other kinds of energy.

The known fluid flow power transformation system including a body of rotation disposed in a body with a diffusor and a convergent cone, and at least one coupling element in the form of a shaft and a foundation block, as described in the patent of Ukraine No. 76445 [MΠK F03B 13/10, F03B 13/12, F03 B 17/02, published on 15.08.2006], is one of the closest to the claimed technical solution in terms of technical specifications and achieved results. The system comprises a body of rotation with an entry end at the front part and an exit end at the rear part thereof, at least one coupling element connecting the entry side with the generator. The body of rotation has a convergent cone- and/or onion-shaped section directed at the entry side of the substantially cylindrical narrow part, and a section with a conic and/or concave or plane section directed at the opposite side. The narrow section of the body of rotation has turbine blades situated circumferentially at regular intervals ensuring rotation of the body of rotation, whose loose front end is fitted to the coupling element located outside driving the generator.

The disadvantages of this power transformation are as follows:
- use for energy generation mainly through sea currents;
- large dimensions and the need of additional fitting to avoid rotation of the diffusor and the convergent cone under the influence of reaction force caused by turbine operation;
- low power due to the loss of kinetic energy on turbine blades, which is rather small at low fluid flow rates;
- major hazard to the environment due to high rotation rate of the blades that are not protected from the surrounding objects.

The objective of the group of inventions is to extend the scope of use of the power transformation system in the field of water and wind power engineering, to increase its power and sensitivity to slow currents by using the potential energy of the fluid, to increase environmental safety and to streamline the design.

In the first embodiment, the objective is achieved in the following way: **according to the invention**, provided the fluid flow power transformation system comprising a body of rotation disposed in a body with a diffusor and a convergent cone and at least one coupling element in the form of a shaft and a foundation block, the body of rotation comprises an outer and an inner shell fixedly connected to the blades of sailing type. The shaft of the body of rotation is connected to the input shaft of the multiplying gear disposed inside the body of the service block and secured in the diffusor or the convergent cone, while the output shaft of the multiplying gear is connected to the power transformation unit.

In the second embodiment, the objective is achieved in the following way: **according to the invention**, provided the fluid flow power transformation system comprising a body of rotation disposed in a body with a diffusor and a convergent cone and at least one coupling element in the form of a shaft and a foundation block, the body of rotation comprises two or more arranged in serial and oppositely rotating wheels with an outer and an inner shells fixedly connected to the blades of sailing type. Even wheels are mounted on the shaft and disposed in spaces restricted by interconnected outer shells of odd wheels. The inner shell of the first odd wheel is connected to the body of the service block, inside which is mounted a multiplying gear whose input shaft is connected to the shaft of even wheels, the output shaft being connected to the power transformation unit.

In both embodiments the diffusor is provided with a protective screen, and the body of the service block is hermetic.

In both embodiments, flexible blades of sailing type being fixedly connected between the outer and the inner shell , create a vane-type slotted body of rotation taking a part of the kinetic energy of the flow. The fluid flow changes its direction and increases the output flow rate causing a pressure drop before and after the body of rotation and being the main requirement for obtaining potential energy from the fluid flow. The operation of the blades in the sail mode means that any point of the blade moves in any direction with a smaller velocity than the velocity of the fluid flow. This is the main difference from using the turbine blades when only kinetic energy of the flow is used because the blade rotation rate in any direction exceeds the fluid flow rate, which is known from well-known technical solutions.

In addition, the sail-like slotted body of rotation does not create hazardous to human high-frequency vibrations. Due to this fact, the fluid flow power transformation system can be installed in the immediate proximity to housing and industrial facilities.

The use of the vane-type slotted body of rotation considerably increases sensitivity to slow currents and retrieves high-power energy from a free fluid flow through using 50% of kinetic energy speeding it up, which allows retrieving potential energy of this flow that is 10-40 times greater than kinetic energy [Treshchalov G.V., High-Efficiency Way of Retrieving Energy from a Free Fluid Flow Based on the Specific Hydrodynamic Effect. - http://www.rusphysics.ru/articles/94/].

The retrieved energy is directed to the input shaft of the multiplying gear and is then transmitted from the output shaft of the multiplying gear to an energy transformation unit such as an electric generator, air, water or heat pumps.

According to the second embodiment, due to the use of two or more arranged in serial and oppositely rotating wheels with sail-type blades on one axle, the energy of swirling from the previous wheel is used in every consecutive wheel; wherein opposed rotation of the wheels doubles rotation rate of the input shaft in relation to the body of the multiplying gear and compensates reactionary torque caused by the influence of fluid flow on even and odd wheels, thus increasing fluid flow power efficiency.

The protective screen of the diffusor increases safety of the claimed fluid flow power transformation system and of the environment.

The essence of the claimed group of inventions is described in the following figures:

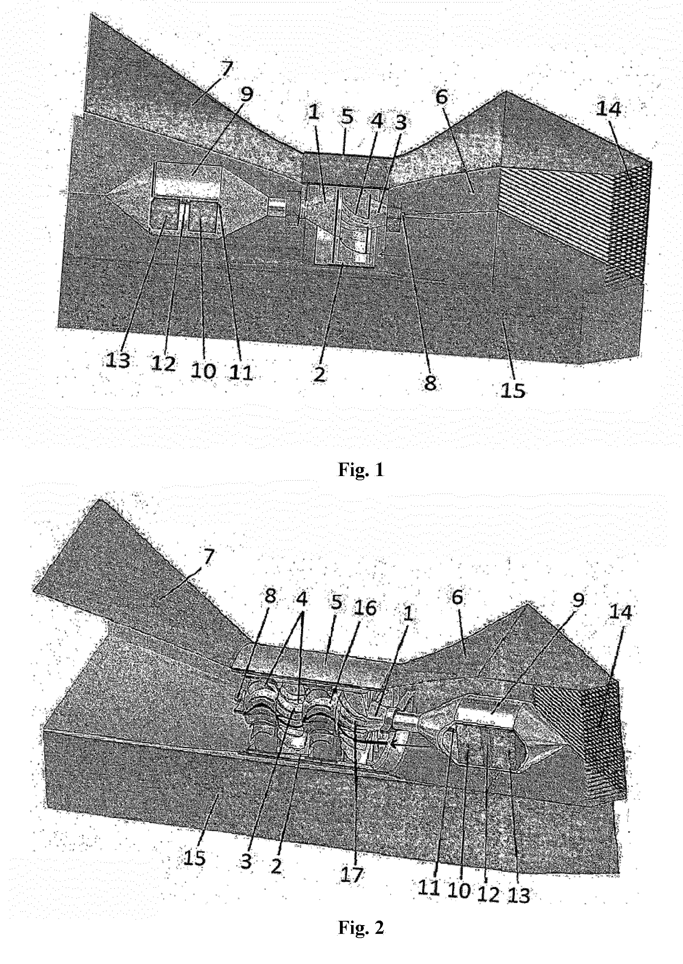

- Fig. 1 is a schematic view of the first embodiment of the fluid flow power transformation system;
- Fig. 2 is a schematic view of the second embodiment of the fluid flow power transformation system (illustration with a body of rotation with four sequentially arranged and oppositely rotating wheels);

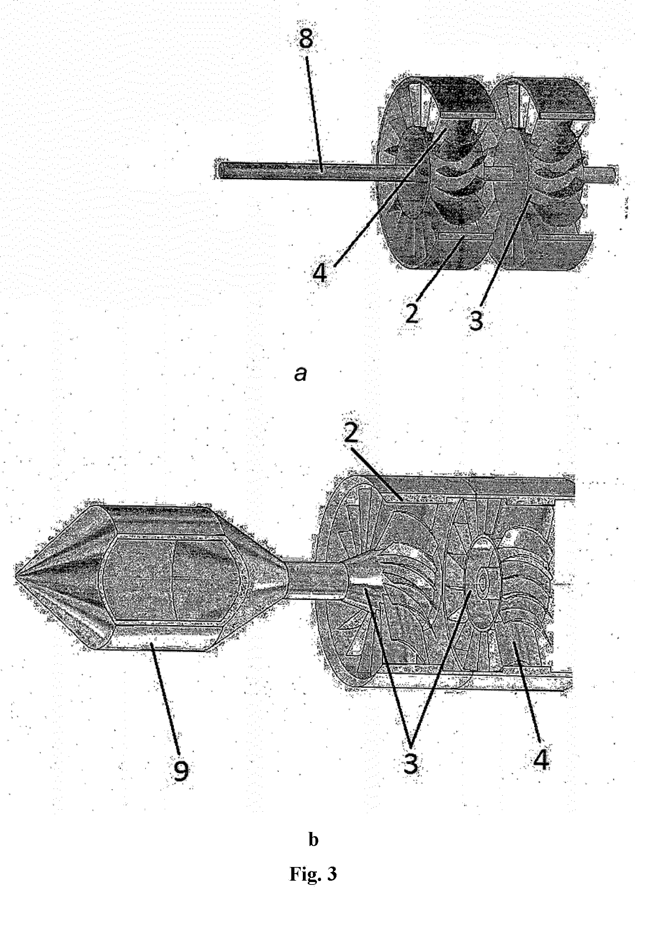

- Fig. 3 is a schematic view of the assembled wheels of the body of rotation: a - even wheels; b - odd wheels.

The first embodiment of the claimed fluid flow power transformation system comprises a body of rotation 1, provided with an outer 2 and an inner 3 shell, connected by sail-type blades by means of fixed connections; wherein the body of rotation is disposed in a body 5 with a diffusor 6 and a convergent cone 7. The body of rotation 1 is pivotally connected by the shaft 8 to the hermetic service block 9 held, for example, in the convergent cone 7 with a multiplying gear 10 arranged inside of its case. The input shaft 11 of the multiplying gear 10 is connected to the shaft 8, while the output shaft 12 is connected to the power transformation unit 13. The diffusor 6 is provided with a protective screen 14. The system is mounted on the foundation block 15.

The second embodiment of the claimed fluid flow power transformation system comprises a body of rotation 1 being disposed in the cylindrical body 5 with a diffusor 6 and a convergent cone 7 and including, for example, four sequentially arranged and oppositely rotating wheels 16 and 17 with an outer 2 and an inner 3 shell, fixedly connected to each other by sail-type blades 4 . Even wheels 16 are mounted on the shaft 8 and are located in spaces circumscribed by outer shells 2 of odd wheels 17. The inner shell 3 of the first odd wheel is rigidly connected to the hermetic housing of the service block 9, inside of which a multiplying gear 10 is attached the input shaft 11 of which is connected to the shaft 8 of even wheels 16, wherein the output shaft 12 is connected to the power transformation unit 13. The diffusor 6 is provided with a protective screen 14. The system is mounted on the foundation block 15.

The first embodiment of the claimed fluid flow power transformation system operates as follows (fluid flow direction is indicated with arrows).

The system is mounted in the water (water modification) or on land (wind modification) in alignment with the direction of the flow. The fluid comes into the diffusor 6 and onto the blades 4 of the body of rotation 1 through the protective screen 14, imparting its energy to the blades. Mechanical energy is transported to the input shaft 11 of the multiplying gear 10 through the shaft 8. Increased in the multiplying gear in terms of the rotation rate, the energy is transferred to the power transformation unit 13 through the output shaft 12.

The second embodiment of the claimed fluid flow power transformation system operates as follows (fluid flow direction is indicated with arrows).

The system is mounted in the water (water modification) or on land (wind modification) in alignment with the direction of the flow. Through the protective screen 14, the fluid comes into the diffusor 6 and onto the blades 4 of the first odd wheel 17 of the rotation body 1 imparting thereby its energy to the blades. As a result of its impact on the blades 4 of the odd wheel 17 the fluid flow changes its direction, swirls and gets to the blades 4 of the even wheel 16. A pressure drop is generated after the change of fluid flow direction at the blades of odd and even wheels, causing the flow to sequentially yield the potential energy of the medium. Mechanical energy is transported to the input shaft 11 of the multiplying gear 10 through the shaft 8. Increased in the multiplying gear in terms of the rotation rate, the energy is transferred to the power transformation unit 13 through the output shaft 12.

Therefore, the claimed group of inventions allows to extend the scope of their use in wind and water power engineering without the need of building dams; thus, they may be installed in any convenient or required place bringing it as close to the consumer as possible with minimum cost price and time of installation. It contributes to a considerable increase in the output power of the system and its sensitivity to slow currents, increases environmental safety of the system, as well as streamlines the design of the fluid flow power transformation system.

The possible applications of the claimed fluid flow power transformation system may be autonomous generation of mechanical energy (outfeed of energy from the driving shaft in order to drive mechanical equipment, such as mills or air, hydraulic or heat pumps) and electric energy (heating of facilities and water) in remote and isolated areas where there is no centralized energy supply, while wind, sea and river currents are available, especially in case of an increase in the costs of energy resources.

## Claims

1. A fluid flow power transformation system comprising a body of rotation disposed in a case with a diffusor and a convergent cone, and at least one coupling element in the form of a shaft and a foundation block **characterized in that** the body of rotation comprises an outer and an inner shell being fixedly connected to each other by sail-type blades.

2. The system of claim 1 **characterized in that** the shaft of the body of rotation is connected to an input shaft of a multiplying gear disposed inside a housing of a service block secured in the diffusor or the convergent cone, while the output shaft of the multiplying gear is connected to a power transformation unit.

3. A fluid flow power transformation system comprising a body of rotation disposed in a body with a diffusor and a convergent cone, at least one coupling element in the form of a shaft and a foundation block **characterized in that** the body of rotation consists of two or more sequentially arranged and oppositely rotating wheels with an outer and an inner shell being fixedly connected to each other by sail-type blades.

4. The system of claim 3 **characterized in that** the even wheels are mounted on the shaft and disposed in spaces circumscribed by interconnected outer shells of odd wheels.

5. The system of claim 3 **characterized in that** the inner shell of the first odd wheel is connected to the housing of the service block, inside of which a multiplying gear is attached the input shaft of which is connected to the shaft of even wheels, wherein the output shaft of the multiplying gear is connected to the power transformation unit.

6. The system of either claim 1 or 2 **characterized in that** the diffusor is provided with a protective screen.

7. The system of either claim 1 or 2 **characterized in that** the housing of the service block is hermetic.

## Amended claims

### Amended claims under Art. 19.1 PCT

**1.** A fluid flow power transformation system comprising a body of rotation (1) disposed in a case (5) with a diffusor (7) and a convergent cone (6), at least one coupling element in the form of a shaft (8) and a foundation block (15), **characterized in that** the body of rotation (1) consists of two or more sequentially arranged and oppositely rotating wheels (16, 17) with an outer and an inner shell (2, 3) being fixedly connected to each other by sail-type blades (4), wherein each of the wheels (16, 17) is carried out as a vane-type slotted body of rotation,
wherein the even wheels are mounted on the shaft (8) and disposed in spaces circumscribed by interconnected outer shells (2) of odd wheels (17),
wherein the inner shell (3) of the first odd wheel (17) is connected to the housing of the service block (9), inside of which a multiplying gear (10) is attached, the input shaft (11) of which is connected to the shaft (8) of even wheels (16), wherein the output shaft (12) of the multiplying gear is connected to the power transformation unit (13).

**2.** The system of claim 1 **characterized in that** the vane-type slotted body of rotation is carried out to operate in a sail mode, wherein any point of the blade moves in any direction with a smaller velocity than the velocity of the fluid flow.

**3.** The system of either claim 1 or 2 **characterized in that** the housing of the service block (9) is hermetic.

Statement under Art. 19.1 PCT
APPLICANT LETTER FOR REPLACEMENT SHEET ACCORDING TO PCT ARTICLE 19

The initial claims 1 and 2 are excluded; the initial claim 3 is amended; the initial claims 4-6 are excluded; the initial claim 7 is original; a new claim 2 is added.
The amendment bases are as follows: the amended claim 1 corresponds to the initial claims 3-5. The feature "wherein each of the wheels (16, 17) is carried out as a vane-type slotted body of rotation" is included into the amended claim 1 that is disclosed in the initial description, page 3, lines 20-23 and page 4, line 9.
The amendment bases for a further claim 2 are as follows: the features of the new claim 2 are disclosed on page 4, lines 1-4 of the initial description.
The amendment bases for a further claim 3 are as follows: the new claim 3 is disclosed in the initial claim 7.

EXPLANATIONS ACCORDING TO PCT ARTICLE 19(1)

The claims amended include one independent claim which relates to the second embodiment of the invention including several sequentially arranged and oppositely rotating wheels, wherein each of the wheels is carried out as a vane-type slotted body of rotation, wherein the even wheels are mounted on the shaft and disposed in spaces circumscribed by interconnected outer shells of the odd wheels, and the inner shell of the first odd wheel is connected to the housing of the service block, inside of which a multiplying gear is attached, the input shaft of which is connected to the shaft of the even wheels, wherein the output shaft of the multiplying gear is connected to the power transformation unit.

In particular due to the blades made as sail-type blades thus forming together with the inner and outer shells a vane-type slotted body of rotation, as well as due to the oppositely rotating wheels sequential arrangement it is achieved a considerable increase of the fluid flow power transformation system sensitivity to slow currents, which is not apparent from the prior art examined during the International Search.
